# FASCICULE DE BREVET EUROPEEN

(11) **EP 4 256 417 B1**
(45) Date de publication et mention de la délivrance du brevet: **30.09.2026**
(21) Numéro de dépôt: 21839607.5
(22) Date de dépôt: 02.12.2021
(51) Int. Cl.: G05G 5/03, G05G 1/04, G05G 9/047, B64C 13/04, B64C 13/50

(54) **PROCÉDÉ DE COMMANDE D'UN MOTEUR D'UNE COMMANDE D'UN AÉRONEF, DISPOSITIF DE COMMANDE ET AÉRONEF**
VERFAHREN ZUR STEUERUNG EINES FLUGZEUGSTEUERUNGSMOTORS, STEUERUNGSVORRICHTUNG UND FLUGZEUG
METHOD FOR CONTROLLING AN AIRCRAFT CONTROL ENGINE, CONTROL DEVICE AND AIRCRAFT

(30) Priorité: 04.12.2020 FR 2012730
(43) Date de publication de la demande: 11.10.2023
(73) Titulaire: Safran Electronics & Defense, 75015 Paris (FR)
(72) Inventeur: MANSOURI, Badr, 77500 MOISSY-CRAMAYEL (FR); JANATI IDRISSI, Hicham, 77550 MOISSY-CRAMAYEL (FR); COPPÉE, Pascal, 77550 MOISSY-CRAMAYEL (FR)
(74) Mandataire: Regimbeau
(86) Numéro de dépôt international: PCT/FR2021/052176
(87) Numéro de publication internationale: WO 2022/117960

(56) Documents cités:
- FR-A1- 2 706 141
- US-A- 5 734 373
- US-A1- 2015 108 281
- US-B2- 8 050 780

## Description

### DOMAINE DE L'INVENTION

La présente invention concerne, de façon générale, les dispositifs de commande d'aéronef. Plus particulièrement elle concerne les dispositifs de commande comprenant un manche dont un retour d'effort ou retour de force permet de restituer ou simuler un effort artificiel qui est ressenti par l'utilisateur via le manche sur lequel il agit.

### ETAT DE LA TECHNIQUE

Un dispositif de commande d'aéronef comprend généralement un manche de pilotage monté rotatif selon un axe dit de roulis et un axe dit de tangage, ces deux axes étant orthogonaux l'un à l'autre. On rencontre le plus souvent des dispositifs de type « manche à balai ».

En fonction de la position du manche selon les deux axes, le dispositif de commande d'aéronef transmet des commandes de déplacement à des organes de pilotage de l'aéronef.

Un dispositif de commande à retour d'effort, ou dispositif haptique à retour d'effort, est un dispositif qui comprend un élément servant à la commande. Cet élément est activé par l'utilisateur. Ce dispositif de commande à retour d'effort est configuré pour générer un effort artificiel ressenti par l'utilisateur, qui s'oppose au mouvement appliqué par la main de l'utilisateur.

Dans le domaine de l'aéronautique, on connaît des dispositifs de commande d'un aéronef qui permettent un retour d'effort vers l'utilisateur. Ces dispositifs prennent généralement la forme d'un manche, qualifié de manche actif.

Ces dispositifs de commande permettent par exemple de commander un avion ou un hélicoptère, plus particulièrement ils permettent de commander des gouvernes ou un ou plusieurs moteurs de l'aéronef. Cette commande est réalisée par l'action d'un déplacement du manche, généralement une rotation, autour d'un axe fixé sur un support. Cette action est réalisée par l'utilisateur ou pilote.

Le retour d'effort via le manche est généralement réalisé par un moteur relié au manche, pour appliquer un effort artificiel. Cet effort artificiel est obtenu par un couple généré par le moteur sur le manche. Cet effort artificiel permet de restituer une raideur et/ou un amortissement. L'intensité de l'effort artificiel à appliquer est déterminée en fonction d'une position angulaire du manche ou du moteur servant à commander le manche, mesurée par un capteur de position.

Pour un effort de type raideur, l'intensité est fonction de l'écart entre la position angulaire du manche et une position angulaire de référence. Pour un effort de type amortissement, l'amplitude est fonction d'une vitesse de rotation du manche (obtenue par dérivation de la position angulaire).

FR 2 706 141 A1 divulgue un procédé de commande d'un moteur d'un dispositif de commande d'un aéronef ainsi qu'un dispositif de commande d'un aéronef.

Les dispositifs de commande, de l'état de l'art, restituant une raideur et un amortissement présentent certaines limitations :
- ils présentent des marges de stabilité très limitées, en particulier dans des situations dans lesquelles l'effort de type raideur est important par rapport à l'effort de type amortissement,
- ils ne permettent pas à l'utilisateur de ressentir un effort de type inertie, c'est à dire qui représente l'inertie de l'aéronef.

On connaît également des dispositifs de commande qui utilisent un capteur d'effort. Sur la base des informations fournies par ce capteur d'effort, ces dispositifs de commande vont restituer un retour d'effort par un asservissement d'effort sur le manche. Ces dispositifs ont l'inconvénient de nécessiter un capteur d'effort en plus du capteur de position, ce qui complexifie le dispositif de commande, augmente le risque de panne et rend le dispositif de commande plus coûteux.

La présente invention a ainsi pour objet un dispositif de commande d'un aéronef qui ne présente pas ces différentes limitations.

### EXPOSE DE L'INVENTION

A cet effet, on prévoit selon l'invention un procédé de commande d'un moteur d'un dispositif de commande d'un aéronef. Le dispositif comporte un manche de pilotage de l'aéronef. Le manche est relié par une liaison mécanique à un arbre du moteur. Le procédé comprend une étape de détermination d'une première intensité Kp représentant une raideur en fonction d'une raideur physique Kₛₛ de ladite liaison mécanique et d'une consigne de raideur Kp_{spec} à restituer sur le manche, d'une deuxième intensité Kv représentant un amortissement en fonction d'un amortissement physique fₛₛ entre le manche et le moteur et d'une consigne d'amortissement Kv_{spec} à restituer sur le manche, et d'une troisième intensité Ka représentant une inertie en fonction d'une inertie physique Jₛₛ du manche et d'une consigne d'inertie Ka_{spec} à restituer sur le manche. Le procédé comprend aussi une étape de calcul d'un couple à commander sur l'arbre du moteur par combinaison linéaire d'une position angulaire de l'arbre par rapport à un stator du moteur, d'une vitesse de rotation de l'arbre par rapport au stator et d'une accélération de l'arbre par rapport au stator avec respectivement lesdites première, deuxième et troisième intensités Kp, Kv et Ka.

Ainsi ce dispositif de commande permet à l'utilisateur de ressentir un effort de type inertie en plus d'un effort de type raideur et d'un effort de type amortissement, sur la base d'informations dérivées de la position angulaire fournie par un simple capteur de position.

Dans un mode de réalisation l'étape de détermination utilise la formule : $Kp = {R}^{2} \frac{{K}_{ss} {Kp}_{spec}}{\left(\frac{1}{{r}_{p}}{K}_{ss}-{Kp}_{spec}\right)}$ où :
R est un rapport de réduction de la liaison mécanique,
Kₛₛ est la raideur physique Kₛₛ de la liaison mécanique,
rₚ est un rayon du manche et
Kp_{spec} est la consigne de raideur à restituer sur le manche.

Dans un mode de réalisation l'étape de détermination utilise la formule : $Kv = {R}^{2} \left({r}_{p}{Kv}_{spec}{\left(\frac{{K}_{ss} + \overline{K} p}{{K}_{ss}}\right)}^{2}-{\left(\frac{\overline{K} p}{{K}_{ss}}\right)}^{2}{f}_{ss}\right)$ où:
R est un rapport de réduction de la liaison mécanique,
rₚ est un rayon du manche,
fₛₛ représente l'amortissement physique entre le manche et le moteur et
Kv_{spec} est la consigne d'amortissement à restituer sur le manche.

Dans un mode de réalisation l'étape de détermination utilise la formule : $Ka = \left({r}_{p}.{Ka}_{spec}-{J}_{ss}\right) {\left(R\frac{{K}_{ss} + \overline{K} p}{{K}_{ss}}\right)}^{2} + \frac{{R}^{2} {\left({f}_{ss}\overline{K}p-{\overline{K} vK}_{ss}\right)}^{2}}{{K}_{ss}^{2} \left({K}_{ss}+\overline{K}p\right)} - {J}_{mot}$ où:
R est un rapport de réduction de la liaison mécanique,
rₚ est un rayon du manche,
Jₛₛ représente l'inertie physique du manche,
Jₘₒₜ représente l'inertie physique de l'arbre du moteur et
Ka_{spec} est la consigne d'inertie à restituer sur le manche.

Dans un mode de réalisation le procédé comprend une étape de réception de la position angulaire de l'arbre du moteur, la position angulaire étant fournie par un capteur de position, la vitesse étant obtenue par dérivation de la position angulaire et l'accélération étant obtenue par dérivation seconde de la position angulaire.

Dans un mode de réalisation le procédé comprend une étape de réception de la position angulaire de l'arbre du moteur, la position angulaire étant reçue d'un capteur de position (CPO). On détermine la vitesse par dérivation de la position angulaire et on détermine l'accélération par dérivation seconde de la position angulaire.

Dans un mode de réalisation on détermine la consigne de raideur, la consigne d'amortissement et la consigne d'inertie à partir de respectivement la position angulaire, la vitesse et l'accélération.

Dans un mode de réalisation le procédé comprend en outre une étape de commande du moteur, l'étape de commande comprenant une détermination d'une consigne de courant électrique à partir du couple, et un asservissement de cette consigne de courant à l'aide d'un correcteur de courant et d'une mesure d'un courant électrique aux bornes du moteur.

On prévoit aussi selon l'invention un dispositif de commande d'un aéronef, le dispositif comprenant un manche, un moteur comprenant un arbre et un stator, l'arbre étant monté tournant dans le stator, et une unité de traitement. L'arbre est relié au manche par une liaison mécanique, le manche est configuré pour commander l'aéronef, l'unité de traitement est configurée pour la mise en œuvre du procédé de commande.

Dans un mode de réalisation le dispositif de commande comprend en outre un capteur configuré pour déterminer une position angulaire de l'arbre par rapport au stator.

On prévoit aussi selon l'invention un aéronef comprenant le dispositif de commande.

### DESCRIPTION DES FIGURES

D'autres caractéristiques, buts et avantages de l'invention ressortiront de la description qui suit, qui est purement illustrative et non limitative et qui doit être lue en regard des dessins annexés sur lesquels :
La figure 1 représente un dispositif de commande d'un aéronef de l'invention.
La figure 2 représente le procédé de contrôle de l'invention.
La figure 3-a représente une raideur de consigne Kp_{spec} en fonction de l'angle du moteur et la figure 3-b représente un amortissement de consigne Kv_{spec} en fonction de la vitesse de rotation du moteur.
La figure 4 représente le schéma synoptique de la chaine mécanique et électrique de l'invention.
La figure 5 représente un modèle utilisé par le dispositif de commande du moteur de l'invention.

### DESCRIPTION DETAILLEE DE L'INVENTION

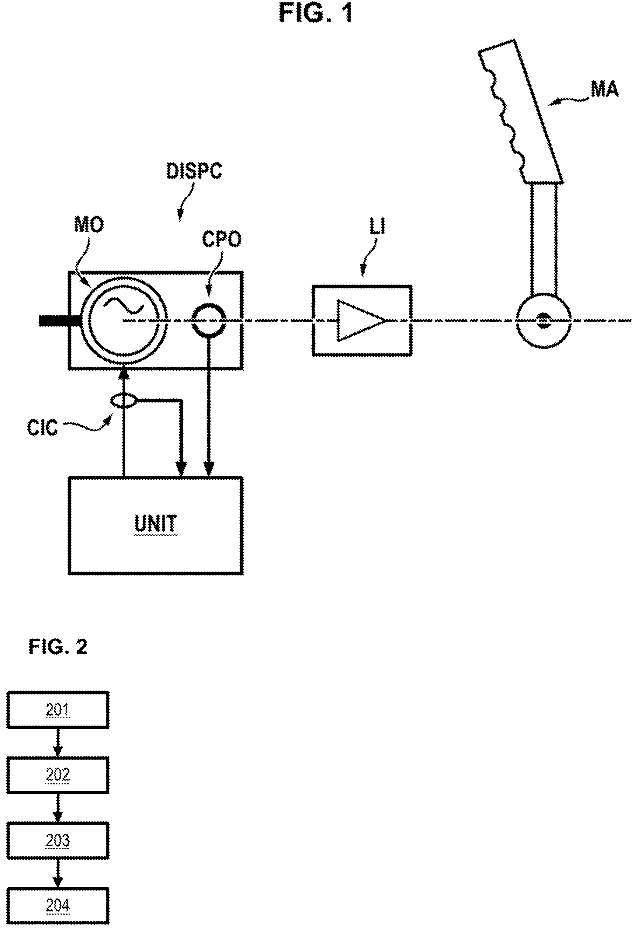

La figure 1 représente le dispositif de commande DISPC de l'invention. Ce dispositif de commande DISPC comprend un manche MA.

Le manche MA est monté rotatif selon un axe dit de roulis et un axe dit de tangage, ces deux axes étant orthogonaux l'un à l'autre.

Pa simplification un seul des axes est représenté sur la figure 1.

Pour chacun des deux axes le dispositif de commande DISPC comprend un moteur MO, un capteur de position angulaire CPO, un capteur CIC d'une intensité d'un courant électrique fourni au moteur MO.

Le moteur MO, le capteur de position angulaire CPO et le capteur CIC sont similaires pour les deux axes. Dans la suite on décrira le fonctionnement du dispositif de commande DISPC selon un seul axe. Le fonctionnement sur l'autre axe est identique.

Le dispositif de commande DISPC comprend également une unité de traitement UNIT.

Ce dispositif de commande DISPC permet de contrôler des gouvernes d'un aéronef ou de contrôler le ou les moteurs de l'aéronef.

Le moteur MO comprend un arbre ou rotor et un stator. L'arbre et le stator sont coaxiaux. L'arbre et le stator présentent pour l'un des bobines et pour l'autre des aimants permanents. Le passage d'un courant électrique dans les bobines entraine une rotation de l'arbre par rapport au stator. Par simplification on utilisera l'expression position angulaire du moteur MO pour désigner la position angulaire de l'arbre par rapport au stator.

Le moteur électrique MO peut être un moteur monophasé (moteur à débattement limité) ou un moteur synchrone à aimant permanent.

Le capteur de position angulaire CPO est configuré pour déterminer une position angulaire du moteur, il est avantageusement accouplé directement sur l'arbre du moteur.

Le manche MA et le moteur MO sont reliés entre eux par une liaison mécanique LI. Plus précisément l'arbre du moteur MO est relié à la liaison mécanique LI qui est reliée au manche MA.

La liaison mécanique LI présente un rapport de réduction R. Par rapport de réduction R, on comprend que, lorsque le moteur électrique MO et plus particulièrement son arbre tourne d'un angle Θ, alors le manche tourne d'un angle R*Θ.

Le rapport de réduction R peut être variable en fonction de la position angulaire du moteur MO de manière non linéaire. Dans ce cas, R représente sa valeur linéarisée autour d'un angle Θ donné.

L'unité de traitement UNIT est configurée pour recevoir du capteur de position CPO la position angulaire du moteur MO. L'unité de traitement est configurée pour recevoir du capteur CIC l'intensité du courant électrique mesurée sur des bornes électriques du moteur MO. L'unité de traitement UNIT est configurée piloter le moteur en courant à partir des consignes d'un courant qui dépend de l'effort à appliquer.

L'unité de traitement UNIT comprend également un correcteur de courant (non représenté sur la figure 1) qui après traitement, fournit un signal présentant des impulsions dont le rapport cyclique peut varier (PWM Pulse Width Modulation en anglais) au pont de puissante qui convertit les impulsions en une tension à appliquer aux bornes électriques du moteur MO afin de délivrer le courant électrique à l'image de l'effort demandé.

L'unité de traitement UNIT est configurée pour la mise en œuvre d'un procédé de commande représenté sur la figure 2. Ce procédé permet de commander le moteur MO relié au manche MA afin que le manche MA fournisse un effort qui sera ressenti par l'utilisateur.

Ce procédé comprend :
- une première étape 201 de réception de la position angulaire moteur MO et de détermination d'une dérivée première de la position angulaire et d'une dérivée seconde de la position angulaire ;
- une deuxième étape 202 de détermination
   - d'une première intensité Kp représentant une raideur en fonction d'une raideur physique de la liaison mécanique LI et d'une consigne de raideur Kp_{spec} à restituer sur le manche MA,
   - d'une deuxième intensité Kv représentant un amortissement en fonction d'un amortissement physique fₛₛ entre le manche MA et le moteur MO et d'une consigne d'amortissement Kv_{spec} à restituer sur le manche, et
   - une troisième intensité Ka représentant une inertie en fonction d'une inertie physique du manche et d'une consigne d'inertie Ka_{spec} à restituer sur le manche (MA)
- une étape 203 de calcul d'un couple, par combinaison linéaire d'une position angulaire de l'arbre par rapport à un stator du moteur, de la vitesse de rotation de l'arbre par rapport au stator du moteur et de l'accélération de l'arbre par rapport au stator du moteur avec respectivement les première, deuxième et troisième intensités Kp, Kv et Ka , et
- une étape 204 de commande du moteur MO afin que le moteur MO génère le couple et les trois efforts sur l'arbre.

La position angulaire de l'arbre du moteur MO par rapport au stator du moteur MO est obtenue du capteur de position angulaire CPO.

La dérivée première de la position angulaire du moteur MO correspond à une vitesse de rotation de l'arbre du moteur MO par rapport au stator du moteur MO.

La dérivée seconde de la position angulaire du moteur MO correspond à une accélération de la rotation de l'arbre du moteur MO par rapport au stator du moteur MO.

La détermination de la dérivée première de la position angulaire et de la dérivée seconde de la position angulaire peut être faite par des algorithmes à l'état de l'art bien connus de l'homme du métier et qui consiste à effectuer une dérivation linéaire ou non linéaire, pour aboutir à des valeurs de la vitesse de rotation du moteur MO et de l'accélération du moteur MO qui ne sont pas bruitées.

La deuxième étape 202 de détermination permet la détermination de trois efforts que doit appliquer le moteur MO sur le manche MA, via la liaison mécanique LI. Chacun des trois efforts constitue une composante élémentaire d'un effort global. L'effort global appliqué sur le manche MA par le moteur MO est donc la somme de ces trois efforts. Cet effort global est ressenti par l'utilisateur lorsqu'il déplace le manche MA

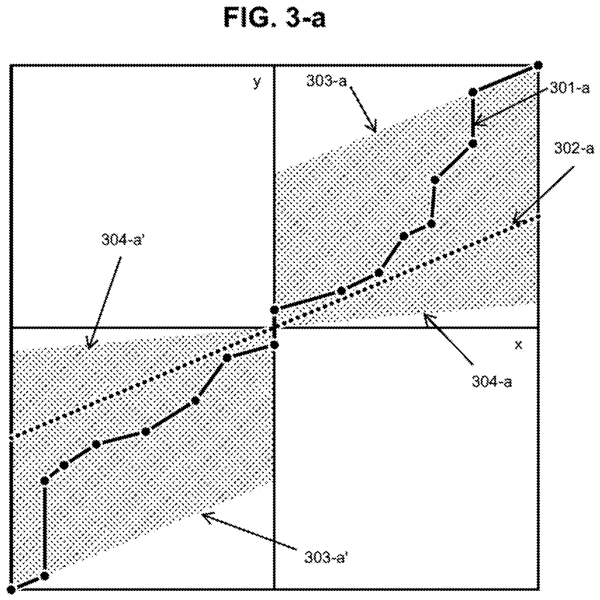

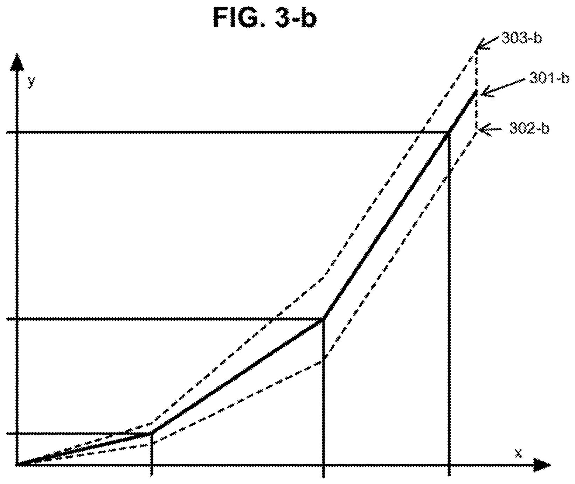

Le premier des trois efforts est un effort restituant une raideur du manche MA. Ce premier effort est généré par le moteur MO. Ce premier effort est proportionnel à un écart angulaire entre la position angulaire de l'arbre du moteur MO par rapport au stator du moteur MO et une position angulaire dite position d'ancrage. Cette position d'ancrage est la position à laquelle revient le manche MA lorsqu'il ne subit pas une action de l'utilisateur. La première intensité Kp est déterminée en fonction de la consigne de raideur Kp_{spec} que le manche MA doit restituer. La raideur à restituer est la raideur que doit ressentir l'utilisateur lorsqu'il utilise le manche MA. Cette consigne de raideur Kp_{spec} peut être un gain qui présente le rapport entre l'effort généré et l'écart angulaire, cette consigne de raideur Kp_{spec} peut être variable en fonction de l'écart angulaire, comme illustrée sur la figure 3-a.

Sur la figure 3-a l'axe des abscisses x représente la position du manche variant d'une position négative de déplacement du manche à une position positive de déplacement du manche. L'axe des ordonnées y représente consigne de raideur Kp_{spec}. La courbe en pointillée 302-a représente l'effet d'un effort de type ressort passif. La courbe pleine 302-a représente la consigne de raideur Kp_{spec}. Cette courbe pleine présente plusieurs zones avec des pentes différentes. Les ronds sur la courbe pleine 302-a représente les ruptures de pente. Les limites 303-a et 303-a' de la zone hachurée représente la limite supérieure de l'évolution de la courbe de la consigne. Les limites 304-a et 304-a' de la zone hachurée représente la limite inférieure optionnelle de l'évolution de la courbe de la consigne.

Le deuxième des trois efforts est un effort restituant un amortissement du manche MA. Ce deuxième effort est généré par le moteur MO. Ce deuxième effort est proportionnel à la vitesse de rotation de l'arbre du moteur MO par rapport au stator du moteur MO. La deuxième intensité Kᵥ est déterminée en fonction de la consigne d'amortissement Kv_{spec} que le manche MA doit restituer. L'amortissement à restituer est l'amortissement que doit ressentir l'utilisateur lorsqu'il utilise le manche MA. Cette consigne d'amortissement Kv_{spec} peut être un gain ou une fonction dépendante de la vitesse de rotation du moteur MO, comme illustré sur la figure 3-b.

Sur la figure 3-b l'axe des abscisses x représente la vitesse de déplacement du manche et l'axe des ordonnées y représente la consigne d'amortissement Kv_{spec}. La courbe 301-b représentant cette consigne est comprise entre une courbe inférieure limite 302-b et une courbe supérieure limite 303-b. De plus cette courbe 301-b présente plusieurs zones ayant des pentes différentes.

Le troisième des trois efforts est un effort restituant une inertie du manche MA. Ce troisième effort est généré par le moteur MO. Ce troisième effort est proportionnel à l'accélération de la rotation de l'arbre du moteur MO par rapport au stator du moteur MO. La troisième intenté Kₐ est déterminée en fonction de la consigne d'inertie Ka_{spec} que le manche MA doit restituer. L'inertie à restituer est l'inertie que doit ressentir l'utilisateur lorsqu'il utilise le manche MA. Cette consigne d'inertie Ka_{spec} peut être un simple gain, ou une loi non linéaire en fonction de l'accélération de la rotation du moteur MO. Elle peut être également indexée par la vitesse de rotation du moteur MO ou la position angulaire du moteur MO.

Les intensités Kp, Ka et Kv sont déterminées en utilisant une fonction de transfert HpSS(s) reliant l'effort Fp(s) ressenti par l'utilisateur sur le manche MA et l'angle Θₘₒₜ(s) de l'arbre du moteur MO par rapport au stator du moteur MO.

Cette fonction de transfert est modélisée par la fonction suivante : $\begin{matrix}HpSS \left(s\right) = \frac{Θmot \left(s\right)}{Fp \left(s\right)} \\ = - {r}_{p} \frac{\left({\overline{J}}_{mot}{s}^{2}+\left({f}_{ss}+\overline{K}v\right)s+{K}_{ss}+\overline{K}p\right)}{{\overline{J}}_{mot} {J}_{ss} {s}^{4} + \left({J}_{ss}{\overline{K}}_{v}+{\overline{J}}_{mot}{f}_{ss}+{J}_{ss}{f}_{ss}\right) {s}^{3} + \left({\overline{J}}_{mot}{K}_{ss}+{J}_{ss}\overline{K}p+{\overline{K} vf}_{ss}+{J}_{ss}{K}_{ss}\right) {s}^{2} + \left({K}_{ss}{\overline{K}}_{v}+{\overline{K}}_{p}{f}_{ss}\right) s + {\overline{K} pK}_{ss}}\end{matrix}$ Où :
Jₘₒₜ est un paramètre prédéterminé de l'inertie de l'arbre du moteur MO
Jₛₛ est un paramètre prédéterminé de l'inertie de la liaison LI entre le moteur MO et le manche MA
fₛₛ est un paramètre prédéterminé de l'amortissement physique entre le moteur MO et le manche MA
Kₛₛ est un paramètre prédéterminé de la raideur de la liaison LI reliant le moteur MO et le manche MA
rₚ est le rayon du manche
Fₛₛ est exprimé en Newton*mètre/radian/seconde (N*m/rad/s).
Kₛₛ est exprimé en Newton*mètre/radian (N*M/rad).
Jₘₒₜ est exprimé en mètre*kilogramme^2 (m*kg²).
Jₛₛ est exprimé en mètre*kilogramme^2 (m*kg²).

Par rayon du manche rp on comprend la distance entre un axe de rotation du manche MA et un point d'application de l'effort par le pilote sur le manche MA.

Kp_{obt} est une intensité de la raideur obtenue et ressentie par l'utilisateur au niveau du manche MA. Kp_{obt} est égale à l'inverse du gain statique de la fonction de transfert HpSS(s). $\frac{1}{{Kp}_{obt}} = \left|{lim}_{s \to 0}\left(HpSS\left(s\right)\right)\right| = \left|-{r}_{p}\frac{\left({K}_{ss}+\overline{K}p\right)}{\left(\overline{K}p∗{K}_{ss}\right)}\right|$

Ainsi : ${Kp}_{obt} = \frac{\left(\overline{K}p∗{K}_{ss}\right)}{\left({K}_{ss}+\overline{K}p\right) {r}_{p}}$

La formule précédente permet de montrer que la raideur ressentie par l'utilisateur est la combinaison de deux raideurs en série, à savoir la raideur générée par le moteur et la raideur de la liaison mécanique LI entre le moteur MO et le manche MA. Ainsi, pour avoir une raideur ressentie par l'utilisateur au niveau du manche dont l'intensité est égale à Kp_{spec}, il faut que le moteur MO génère un premier effort, de type raideur, dont l'intensité est égale à : $Kp = {R}^{2} \frac{{K}_{ss} {Kp}_{spec}}{\left(\frac{1}{{r}_{p}}{K}_{ss}-{Kp}_{spec}\right)}$

Dans la formule précédente ${\overline{K}}_{p} = \frac{{K}_{p}}{{R}^{2}}$.

Kv_{obt} est une intensité de l'amortissement obtenu et ressenti par l'utilisateur au niveau du manche MA. Kv_{obt} est égale au gain statique d'ordre 1 de la fonction HpSS(s), que l'on peut calculer à partir de l'hypothèse suivante valable en basse fréquence : $\frac{1}{HpSS \left(s\right)} \approx {Kp}_{obt} + {Kv}_{obt} s$

Ou de manière exacte : ${Kv}_{obt} = \left|{lim}_{s \to 0}\left(\frac{1}{S}\left(\frac{1}{HpSS \left(S\right)}-{Kp}_{obt}\right)\right)\right|$

En posant ${HpBF}_{v} \left(s\right) = \frac{1}{s} \left(\frac{1}{HpSS \left(s\right)}-{Kp}_{obt}\right)$ on obtient : $\begin{matrix}{HpBF}_{v} \left(S\right) \\ = \frac{1}{S} \left(\begin{matrix}\frac{\left({\overline{J}}_{mot}{J}_{ss}{s}^{4}+\left({J}_{ss}\overline{K}v+{\overline{J}}_{mot}{f}_{ss}+{J}_{ss}{f}_{ss}\right){s}^{3}+\left({\overline{J}}_{mot}{K}_{ss}+{J}_{ss}\overline{K}p+{\overline{K} vf}_{ss}+{J}_{ss}{K}_{ss}\right){s}^{2}+\left({K}_{ss}\overline{K}v+{\overline{K} pf}_{ss}\right)s+{\overline{K}}_{p}∗{K}_{ss}\right)}{- {r}_{p} \left({J}_{mot}{s}^{2}+\left({f}_{ss}+\overline{K}v\right)s+{K}_{ss}+\overline{K}p\right)} \\ - \frac{\left({\overline{K} pK}_{ss}\right)}{\left({K}_{ss}+\overline{K}p\right) {r}_{p}}\end{matrix}\right)\end{matrix}$

En faisant tendre s vers 0 on obtient : ${HpBF}_{v} \left(0\right) = - \frac{1}{{r}_{p}} \left(\frac{{K}_{ss}^{2} \overline{K} v + {f}_{ss} {\overline{K} p}^{2}}{{\left({K}_{ss}+\overline{K}p\right)}^{2}}\right)$

L'intensité de l'amortissement obtenu et ressenti par l'utilisateur au niveau du manche MA est donc donnée par l'équation : ${Kv}_{obt} = \frac{1}{{r}_{p}} \left({\left(\frac{{K}_{ss}}{{K}_{ss} + \overline{K} p}\right)}^{2}\overline{K}v+{\left(\frac{\overline{K} p}{{K}_{ss} + \overline{K} p}\right)}^{2}{f}_{ss}\right)$

L'amortissement ressenti par l'utilisateur est donc la somme de l'amortissement généré par le moteur et de l'amortissement de la liaison physique LI entre le manche MA et le moteur MO. Cette somme est pondérée par la raideur de la liaison physique LI et par la raideur générée par le moteur MO. Ainsi, pour avoir un amortissement ressenti par l'utilisateur au niveau du manche égale dont l'intensité Kv_{obt} est égale à Kv_{spec}, il faut que le moteur MO génère un deuxième effort dont l'intensité Kv est égale à : $Kv = {R}^{2} \left({r}_{p}{Kv}_{spec}{\left(\frac{{K}_{ss} + \overline{K} p}{{K}_{ss}}\right)}^{2}-{\left(\frac{\overline{K} p}{{K}_{ss}}\right)}^{2}{f}_{s}\right)$

Ka_{obt} est une intensité de l'inertie obtenue et ressentie par l'utilisateur au niveau du manche MA. Cette intensité Ka_{obt} est égale au gain statique d'ordre 2 de la fonction HpSS(s). Ce gain statique est calculé en prenant l'hypothèse suivante valable en basse fréquence : $\frac{1}{HpBF \left(S\right)} \approx {Kp}_{obt} + {Kv}_{obt} s + {Ka}_{obt} {s}^{2}$

L'intensité Ka_{obt} de l'inertie obtenue et ressentie par l'utilisateur au niveau du manche MA est donc : ${Ka}_{obt} \approx \frac{1}{{s}^{2}} \left(\frac{1}{HpSS \left(S\right)}-{Kp}_{obt}-{Kv}_{obt}∗s\right)$

De manière exacte, on a : ${Ka}_{obt} = \left|{lim}_{s \to 0}\left(\frac{1}{{s}^{2}}\left(\frac{1}{HpSS \left(s\right)}-{Kp}_{spec}-{Kv}_{spec}s\right)\right)\right|$

Après développement on trouve : ${Ka}_{obt} = \left|-\frac{1}{{r}_{p}}\left({J}_{ss}+{\overline{J}}_{mot}\frac{{K}_{ss}^{2}}{{\left({K}_{ss}+\overline{K}p\right)}^{2}}-\frac{{\left({f}_{ss}\overline{K}p-{\overline{K} vK}_{ss}\right)}^{2}}{{\left({K}_{ss}+\overline{K}p\right)}^{3}}\right)\right|$

Pour des raisons de faisabilité physique on sait que : ${J}_{ss} + {\overline{J}}_{mot} . \frac{{K}_{ss}^{2}}{{\left({K}_{ss}+\overline{K}p\right)}^{2}} > \frac{{\left({f}_{ss}\overline{K}p-{\overline{K} vK}_{ss}\right)}^{2}}{{\left({K}_{ss}+\overline{K}p\right)}^{3}}$

Et comme l'entrée supposée du système est une force, l'intensité Ka_{obt} est exprimée en m.Kg2 et est donnée par l'équation suivante : ${Ka}_{obt} = {J}_{ss} + {\overline{J}}_{mot} . \frac{{K}_{ss}^{2}}{{\left({K}_{ss}+\overline{K}p\right)}^{2}} - \frac{\left({f}_{ss}\overline{K}p-\overline{K}{vK}_{ss}\right)}{{\left({K}_{ss}+\overline{K}p\right)}^{3}}$

Cette équation montre clairement l'impact de la raideur restituée, l'amortissement restitué et l'inertie restituée sur l'inertie restituée au niveau du manche MA par l'utilisateur. Cependant, quand le système physique est infiniment rigide, i.e, Kₛₛ → ∞, l'inertie ressentie par l'utilisateur n'est que la somme de l'inertie de la liaison mécanique LI et de l'inertie du moteur MO. Ainsi l'effet de la raideur artificielle sur l'inertie globale est annulé.

Ainsi, pour avoir une inertie ressentie par l'utilisateur dont l'intensité Ka_{obt} est égale à Ka_{spec}, l'intensité Ka de l'inertie à restituer, que doit générer le moteur MO, doit être égale à : $Ka = \left({r}_{p}{Ka}_{spec}-{J}_{ss}\right) {\left(R\frac{{K}_{ss} + \overline{K} p}{{K}_{ss}}\right)}^{2} + \frac{{R}^{2} {\left({f}_{ss}\overline{K}p-\overline{K}{vK}_{ss}\right)}^{2}}{{K}_{ss}^{2} \left({K}_{ss}+\overline{K}p\right)} - {J}_{mot}$

Ainsi la deuxième étape 202 de détermination permet de déterminer les intensités (Kp, Kv et Ka) de trois efforts que doit appliquer le moteur MO afin d'actionner en mouvement le manche MA et afin que l'utilisateur ressente, via la manche MA, trois efforts restituant une raideur du manche MA, un amortissement du manche MA et une inertie du manche MA et de consignes respectives Kp_{spec}, Kv_{spec}, et Ka_{spec}.

Kp et Kp_{spec} sont exprimés en Newton*mètre/radian (N*m/rad)..

Kv et Kv_{spec} sont exprimés en Newton*mètre/radian/second (N*m/rad/s).

Ka et Ka_{spec} sont exprimés en mètre*kilogramme^2 (m*kg^2)..

On peut noter que la fonction de transfert reliant l'effort de l'utilisateur sur le manche et l'angle du manche peut s'exprimer en basse fréquence sous la forme suivante : $HpBF = \frac{{θ}_{ss} \left(s\right)}{Fp \left(s\right)} \approx \frac{1 / {Kp}_{spec}}{\frac{{Ka}_{spec}}{{Kp}_{spec}} {s}^{2} + \frac{{Kv}_{spec}}{{Kp}_{spec}} s + 1}$

Ce modèle en basse fréquence peut être représenté par une fonction du second ordre de forme canonique H_{Gabarit} de la forme suivante : ${H}_{Gabarit} \left(s\right) = \frac{1 / K}{\frac{1}{{\left(2πf\right)}^{2}} {s}^{2} + \frac{2 ξ}{\left(2πf\right)} s + 1}$

Où f est la fréquence de coupure, ξ
est un paramètre de l'amortissement souhaité et 1/K est un gain statique. Ces éléments peuvent être exprimés en fonction de la consigne de raideur Kp_{spec} que doit restituer le manche MA, de la consigne d'amortissement Kv_{spec} que doit restituer le manche MA et de la consigne d'inertie Ka_{spec} que doit restituer le manche MA : $f = \frac{1}{2 π} \sqrt{\frac{{Kp}_{spec}}{{Ka}_{spec}}}$ $ξ = πf \frac{{Kv}_{spec}}{{Kp}_{spec}}$ ou $ξ = \frac{1}{2} \frac{{Kv}_{spec}}{\sqrt{{Kp}_{spec} {Ka}_{spec}}}$ $K = \frac{1}{{Kp}_{spec}}$

Dans un mode de réalisation, le procédé comprend une étape de détermination de la consigne de raideur Kp_{spec} que doit restituer le manche MA, de la consigne d'amortissement Kv_{spec} que doit restituer le manche MA et de la consigne d'inertie Ka_{spec} que doit restituer le manche MA, à partir de la fréquence de coupure f, du paramètre de l'amortissement souhaité ξ
et du gain statique 1/K. Ceci est réalisé en utilisant successivement les formules suivantes : ${Kp}_{spec} = \frac{1}{K} ,$ ${Kv}_{spec} = ξ \frac{{Kp}_{spec}}{πf}$ ${Ka}_{spec} = \frac{{Kp}_{spec}}{{\left(2πf\right)}^{2}}$ ξ
est exprimé en Newton*mètre/radian (N*m/rad).
f est exprimé en hertz (Hz).
K est exprimé en radian/Newton*mètre (rad/N*m).

L'étape de calcul 203 du couple que doit générer le moteur à partir des trois efforts est réalisée par combinaison linéaire de la position angulaire, de la dérivée première de la position angulaire et de la dérivée seconde de la position angulaire avec les intensités Ka, Kp et Kv associés aux trois efforts, que doit générer le moteur MO via son arbre.

Dans un mode de réalisation on détermine trois couples, le premier en fonction de la position, le deuxième en fonction de la vitesse et le troisième en fonction de l'accélération et on somme ces trois couples.

Dans le cas où les consignes sont variables (loi artificielle non linéaire), on utilise une table de correspondance (lookup-table en anglais) de l'intensité des efforts, qui permettent de déterminer les intensités Kp, Kv et Ka en fonction respectivement de la position angulaire de l'arbre, de la vitesse de rotation de l'arbre et de l'accélération de la rotation de l'arbre.

L'étape 204 de commande du moteur à partir du couple déterminé comprend une première étape de détermination d'une consigne d'un courant électrique permettant d'alimenter le moteur électrique MO afin qu'il fournisse, sur son arbre, le couple déterminé à l'étape de calcul 203. Cette étape comprend aussi l'asservissement de cette consigne de courant à l'aide d'un correcteur de courant et de la mesure du courant électrique aux bornes du moteur MO.

Ainsi la somme des trois efforts constitue l'intensité du couple que le moteur MO doit générer. Plus particulièrement la valeur du couple que le moteur doit générer dépend des intensités des efforts (raideur, amortissement et inertie) qu'on souhaite appliquer au niveau manche. Par exemple, si on souhaite restituer une raideur pure l'effort à appliquer au niveau du manche MA est Ka* Θ. Cette intensité du couple est transformée en une consigne de courant en utilisant soit une relation linéaire par le biais de la constante de couple moteur, soit une relation non-linéaire entre le couple et le courant défini par le constructeur selon les caractéristiques intrinsèques du moteur MO. Ensuite, cette consigne de courant est mise à disposition du bloc 303 permettant l'asservissement de la tension du courant électrique délivré aux bornes du moteur MO.

Cette détermination de l'intensité du courant est réalisée en se basant sur les caractéristiques du dispositif de commande DISP et en particulier du moteur électrique MO. Cette détermination de l'intensité peut être une loi linéaire dans le cas idéal ou non linéaire prenant en compte la saturation magnétique, la température, etc.

Suite à la détermination de l'intensité du courant électrique, une boucle de rétroaction permet un suivi de la consigne de l'intensité de courant. Cette boucle de rétroaction utilise les éléments suivants :
- la capteur CIC de l'intensité du courant délivré au moteur,
- le système de conditionnement permettant de déterminer le rapport cyclique du courant électrique alimentant le moteur MO,
- le correcteur de courant permettant de délivrer une tension de commande qui est transformée en un rapport cyclique variable, selon le niveau de tension,
- le pont de puissance permettant de délivrer la tension à appliquer aux bornes du moteur électrique en fonction du rapport cyclique calculé par le correcteur de courant et
- le moteur électrique recevant une tension du pont de puissance.

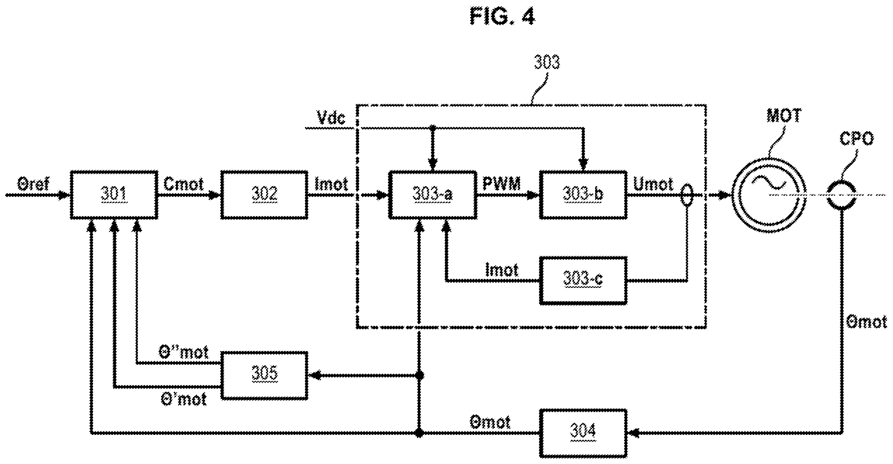

La figure 4 représente d'une autre manière le dispositif de commande DISPC du moteur MO. Sur cette figure Θmot représente la position angulaire du moteur MO, Θ'mot représente la vitesse angulaire du moteur MO et Θ"mot représente l'accélération angulaire du moteur MO. Θref représente la position du manche au repos. Le bloc 301 est le bloc permettant de déterminer les intensités des trois efforts que le moteur doit générer. Le bloc 302 est le bloc permettant de déterminer l'équivalence entre la consigne de courant électrique Imot et la consigne du couple moteur Cmot Le bloc 303 est le bloc permettant l'asservissement du courant électrique délivré aux bornes du moteur MO en fonction de l'intensité Imot du courant électrique permettant de générer le couple Cmot. Le bloc 303-a est la boucle de courant qui permet à partir de l'intensité du courant électrique Imot à délivrer de déterminer un rapport cyclique PWM de la tension Vdc délivrée au moteur MO. Le bloc 303-b est le pont de puissance délivrant une tension aux bornes du moteur MO à partir des rapports cycliques PWM. Le bloc 303-c est le capteur de courant électrique délivrant la mesure du courant électrique qui circule dans le moteur MO. Le bloc 304 permet le traitement du signal délivré par le capteur de position COP afin d'obtenir la position angulaire Θmot du moteur MO. Le bloc 305 est le filtrage de Kalman permettant d'obtenir Θ'mot et Θ"mot à partir de Θmot.

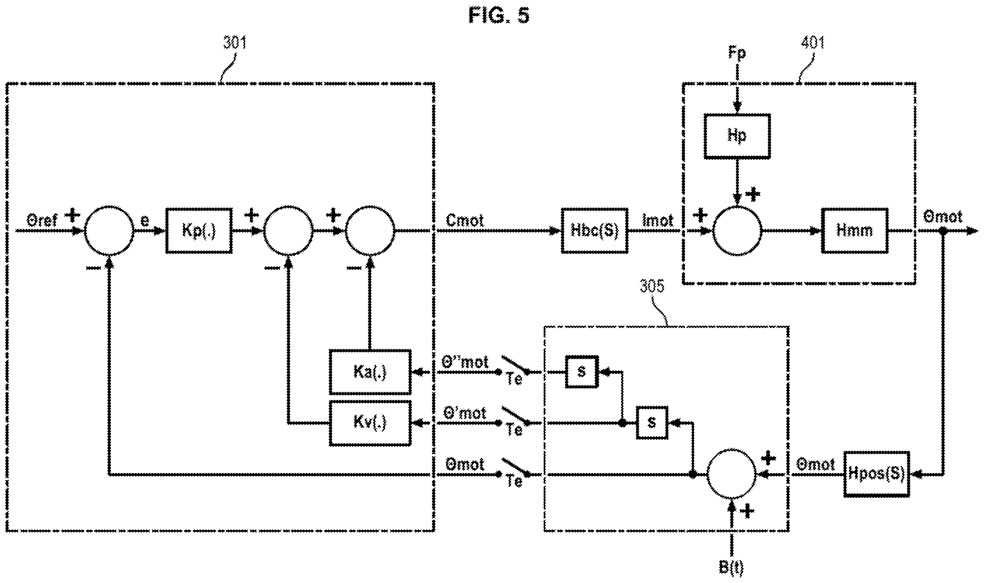

Ainsi le procédé de commande utilise un modèle tel que représenté en figure 5. Sur cette figure Hbc représente la fonction de transfert de la boucle de courant et la fonction de transfert entre le couple Cmot que doit générer le moteur MO et l'intensité Imot du courant électrique aux bornes du moteur MO. Hpos représente la fonction de transfert du capteur de position. Hp représente la fonction de transfert entre l'effort pilote et la part de l'effort sur le manche MA généré par le moteur MO. Hmm représente la fonction de transfert entre l'effort résultant sur le manche MA généré par l'utilisateur et le moteur MO et la position du moteur MO. Sur cette figure Θmot représente la position angulaire du moteur MO, Θ'mot représente la vitesse angulaire du moteur MO et Θ"mot représente l'accélération angulaire du moteur MO. Θref représente la position du manche au repos. Comme pour la figure 3, le bloc 301 est le bloc permettant de déterminer les intensités des trois efforts que le moteur doit générer. Le bloc 401 représente la chaine mécanique constitué du moteur MO et de son arbre, du manche MA et de la liaison entre l'arbre et le manche MA et des différents paramètres de raideur, amortissement et inertie de ces éléments. Comme pour la figure 3, le bloc 305 est le filtrage de Kalman.

## Revendications

1. Procédé de commande d'un moteur (MO) d'un dispositif de commande d'un aéronef, le dispositif comportant un manche (MA) de pilotage de l'aéronef, le manche (MA) étant relié par une liaison mécanique (LI) à un arbre du moteur (MO), le procédé comprenant les étapes de
- détermination (202)
- d'une première intensité Kp, représentant une raideur, en fonction d'une raideur physique Kₛₛ de la liaison mécanique (LI) et d'une consigne de raideur Kp_{spec} à restituer sur le manche (MA),
- d'une deuxième intensité Kv, représentant un amortissement, en fonction d'un amortissement physique fₛₛ entre le manche (MA) et le moteur (MO) et d'une consigne d'amortissement Kv_{spec} à restituer sur le manche (MA), et
- d'une troisième intensité Ka, représentant une inertie, en fonction d'une inertie physique Jₛₛ du manche (MA) et d'une consigne d'inertie Ka_{spec} à restituer sur le manche (MA) ; et
- calcul (203) d'un couple à commander sur l'arbre du moteur (MO) par combinaison linéaire d'une position angulaire de l'arbre par rapport à un stator du moteur (MO), d'une vitesse de rotation de l'arbre par rapport au stator et d'une accélération de l'arbre par rapport au stator avec respectivement les première, deuxième et troisième intensités Kp, Kv et Ka.

2. Procédé de commande selon la revendication 1 dans lequel :
l'étape de détermination (202) utilise la formule : $Kp = {R}^{2} \frac{{K}_{ss} {Kp}_{spec}}{\left(\frac{1}{{r}_{p}}{K}_{ss}-{Kp}_{spec}\right)}$ où :
R est un rapport de réduction de la liaison mécanique (LI),
Kₛₛ est la raideur physique de la liaison mécanique (LI),
rₚ est un rayon du manche (MA) et
Kp_{spec} est la consigne de raideur à restituer sur le manche (MA).

3. Procédé de commande selon la revendication 1 ou 2 dans lequel :
l'étape de détermination (202) utilise la formule : $Kv = {R}^{2} \left({r}_{p}{Kv}_{spec}{\left(\frac{{K}_{ss} + \overline{K} p}{{K}_{ss}}\right)}^{2}-{\left(\frac{\overline{K} p}{{K}_{ss}}\right)}^{2}{f}_{ss}\right)$
où:
R est un rapport de réduction de la liaison mécanique (LI),
rₚ est un rayon du manche (MA),
fₛₛ représente l'amortissement physique entre le manche (MA) et le moteur (MO) et
Kv_{spec} est la consigne d'amortissement à restituer sur le manche (MA).

4. Procédé de commande selon l'une des revendications 1 à 3 dans lequel :
l'étape de détermination (202) utilise la formule : $Ka = \left({r}_{p}{. Ka}_{spec}-{J}_{ss}\right) {\left(R\frac{{K}_{ss} + \overline{K} p}{{K}_{ss}}\right)}^{2} + \frac{{R}^{2} {\left({f}_{ss}\overline{K}p-\overline{K}{vK}_{ss}\right)}^{2}}{{K}_{ss}^{2} \left({K}_{ss}+\overline{K}p\right)} - {J}_{mot}$ où:
R est un rapport de réduction de la liaison mécanique (LI),
rₚ est un rayon du manche (MA),
Jₛₛ représente l'inertie physique du manche (MA),
Jₘₒₜ représente l'inertie physique de l'arbre du moteur (MO) et
Ka_{spec} est la consigne d'inertie à restituer sur le manche (MA).

5. Procédé de commande selon l'une des revendications 1 à 4 comprenant une étape de réception (202) de la position angulaire de l'arbre du moteur (MO), la position angulaire étant reçue d'un capteur de position (CPO), on détermine la vitesse par dérivation de la position angulaire et on détermine l'accélération par dérivation seconde de la position angulaire.

6. Procédé de commande selon l'une des revendications 1 à 5, dans lequel on détermine la consigne de raideur, la consigne d'amortissement et la consigne d'inertie à partir de respectivement la position angulaire, la vitesse et l'accélération.

7. Procédé de commande selon l'une des revendications 1 à 6 comprenant en outre une étape de commande (204) du moteur (MO), l'étape de commande (204) comprenant :
- une détermination d'une consigne de courant électrique à partir du couple, et
- un asservissement de cette consigne de courant électrique à l'aide d'un correcteur de courant et d'une mesure d'un courant électrique aux bornes du moteur (MO).

8. Dispositif de commande d'un aéronef, le dispositif comprenant :
- un manche (MA),
- un moteur (MO) comprenant un arbre et un stator, l'arbre étant monté tournant dans le stator, et
- une unité de traitement (UNIT),
l'arbre étant relié au manche (MA) par une liaison mécanique (LI),
le manche (MA) étant configuré pour commander l'aéronef,
l'unité de traitement (UNIT) étant configurée pour déterminer
- une première intensité Kp, représentant une raideur, en fonction d'une raideur physique Kₛₛ de la liaison mécanique (LI) et d'une consigne de raideur Kp_{spec} à restituer sur le manche (MA),
- une deuxième intensité Kv, représentant un amortissement, en fonction d'un amortissement physique fₛₛ entre le manche (MA) et le moteur (MO) et d'une consigne d'amortissement Kv_{spec} à restituer sur le manche (MA), et
- une troisième intensité Ka, représentant une inertie, en fonction d'une inertie physique Jₛₛ du manche (MA) et d'une consigne d'inertie Ka_{spec} à restituer sur le manche (MA) ; et
pour calculer un couple à commander sur l'arbre du moteur (MO) par combinaison linéaire d'une position angulaire de l'arbre par rapport à un stator du moteur (MO), d'une vitesse de rotation de l'arbre par rapport au stator et d'une accélération de l'arbre par rapport au stator avec respectivement les première, deuxième et troisième intensités Kp, Kv et Ka.

9. Dispositif de commande selon la revendication 8 comprenant en outre un capteur (CPO) configuré pour déterminer une position angulaire de l'arbre par rapport au stator.

10. Aéronef comprenant le dispositif de commande de la revendication 8 ou 9.

## Patentansprüche

1. Verfahren zur Steuerung eines Motors (MO) einer Steuerungsvorrichtung eines Luftfahrzeugs, wobei die Vorrichtung einen Steuerknüppel (MA) zum Steuern des Luftfahrzeugs umfasst, wobei der Steuerknüppel (MA) über eine mechanische Verbindung (LI) mit einer Welle des Motors (MO) verbunden ist, wobei das Verfahren die folgenden Schritte umfasst:
- Bestimmen (202)
- einer ersten Stärke Kp, die eine Steifigkeit darstellt, in Abhängigkeit von einer physikalischen Steifigkeit Kₛₛ der mechanischen Verbindung (LI) und einem auf den Steuerknüppel (MA) zu übertragenden Steifigkeitssollwert Kp_{spec},
- einer zweiten Stärke Kv, die eine Dämpfung darstellt, in Abhängigkeit von einer physikalischen Dämpfung fₛₛ zwischen dem Steuerknüppel (MA) und dem Motor (MO) und einem auf den Steuerknüppel (MA) zu übertragenden Dämpfungssollwert Kv_{spec}, und
- einer dritten Stärke Ka, die eine Trägheit darstellt, in Abhängigkeit von einer physikalischen Trägheit Jₛₛ des Steuerknüppels (MA) und einem auf den Steuerknüppel (MA) zu übertragenden Trägheitssollwert Ka_{spec}; und
- Berechnen (203) eines an der Welle des Motors (MO) anzusteuernden Drehmoments durch lineare Kombination einer Winkelposition der Welle relativ zu einem Stator des Motors (MO), einer Drehzahl der Welle relativ zu dem Stator und einer Beschleunigung der Welle relativ zu dem Stator mit jeweils der ersten, zweiten und dritten Stärke Kp, Kv und Ka.

2. Steuerungsverfahren nach Anspruch 1, wobei:
der Bestimmungsschritt (202) die Formel verwendet: $Kp = {R}^{2} \frac{{K}_{ss} {Kp}_{spec}}{\left(\frac{1}{{r}_{p}}{K}_{ss}-{Kp}_{spec}\right)}$ wobei:
R ein Untersetzungsverhältnis der mechanischen Verbindung (LI) ist,
Kₛₛ die physikalische Steifigkeit der mechanischen Verbindung (LI) ist,
rₚ ein Radius des Steuerknüppels (MA) ist und
Kp_{spec} der auf den Steuerknüppel (MA) zu übertragende Steifigkeitssollwert ist.

3. Steuerungsverfahren nach Anspruch 1 oder 2, wobei:
der Bestimmungsschritt (202) die Formel verwendet: $Kv = {R}^{2} \left({r}_{p}{Kv}_{spec}{\left(\frac{{K}_{ss} + \overline{K} p}{{K}_{ss}}\right)}^{2}-{\left(\frac{\overline{K} p}{{K}_{ss}}\right)}^{2}{f}_{ss}\right)$ wobei:
R ein Untersetzungsverhältnis der mechanischen Verbindung (LI) ist,
rₚ ein Radius des Steuerknüppels (MA) ist,
fₛₛ die physikalische Dämpfung zwischen dem Steuerknüppel (MA) und dem Motor (MO) darstellt und
Kv_{spec} der auf den Steuerknüppel (MA) zu übertragende Dämpfungssollwert ist.

4. Steuerungsverfahren nach einem der Ansprüche 1 bis 3, wobei:
der Bestimmungsschritt (202) die Formel verwendet: $Ka = \left({r}_{p}{. Ka}_{spec}-{J}_{ss}\right) {\left(R\frac{{K}_{ss} + \overline{K} p}{{K}_{ss}}\right)}^{2} + \frac{{R}^{2} {\left({f}_{ss}\overline{K}p-\overline{K}{vK}_{ss}\right)}^{2}}{{K}_{ss}^{2} \left({K}_{ss}+\overline{K}p\right)} - {J}_{mot}$ wobei:
R ein Untersetzungsverhältnis der mechanischen Verbindung (LI) ist,
rₚ ein Radius des Steuerknüppels (MA) ist,
Jₛₛ die physikalische Trägheit des Steuerknüppels (MA) darstellt,
Jₘₒₜ die physikalische Trägheit der Welle des Motors (MO) darstellt und
Ka_{spec} der auf den Steuerknüppel (MA) zu übertragende Trägheitssollwert ist.

5. Steuerungsverfahren nach einem der Ansprüche 1 bis 4, umfassend einen Schritt (202) des Empfangens der Winkelposition der Welle des Motors (MO), wobei die Winkelposition von einem Positionssensor (CPO) empfangen wird, die Geschwindigkeit durch Ableitung der Winkelposition bestimmt wird und die Beschleunigung durch zweite Ableitung der Winkelposition bestimmt wird.

6. Steuerungsverfahren nach einem der Ansprüche 1 bis 5, wobei der Steifigkeitssollwert, der Dämpfungssollwert und der Trägheitssollwert jeweils aus der Winkelposition, der Geschwindigkeit und der Beschleunigung ermittelt werden.

7. Steuerungsverfahren nach einem der Ansprüche 1 bis 6, das ferner einen Steuerungsschritt (204) des Motors (MO) umfasst, wobei der Steuerungsschritt (204) umfasst:
- eine Ermittlung eines elektrischen Stromsollwerts anhand des Drehmoments und
- eine Regelung dieses elektrischen Stromsollwerts mit Hilfe eines Stromkorrektors und einer Messung eines elektrischen Stroms an den Klemmen des Motors (MO).

8. Steuerungsvorrichtung eines Luftfahrzeugs, wobei die Vorrichtung umfasst:
- einen Steuerknüppel (MA),
- einen Motor (MO), der eine Welle und einen Stator umfasst, wobei die Welle drehbar im Stator gelagert ist, und
- eine Verarbeitungseinheit (UNIT),
wobei die Welle über eine mechanische Verbindung (LI) mit dem Steuerknüppel (MA) verbunden ist,
wobei der Steuerknüppel (MA) zur Steuerung des Luftfahrzeugs ausgelegt ist,
wobei die Verarbeitungseinheit (UNIT) dazu ausgelegt ist, um zu bestimmen
- eine erste Stärke Kp, die eine Steifigkeit darstellt, in Abhängigkeit von einer physikalischen Steifigkeit Kₛₛ der mechanischen Verbindung (LI) und einem auf den Steuerknüppel (MA) zu übertragenden Steifigkeitssollwert Kp_{spec},
- eine zweite Stärke Kv, die eine Dämpfung darstellt, in Abhängigkeit von einer physikalischen Dämpfung fₛₛ zwischen dem Steuerknüppel (MA) und dem Motor (MO) und einem auf den Steuerknüppel (MA) zu übertragenden Dämpfungssollwert Kv_{spec}, und
- eine dritte Stärke Ka, die eine Trägheit darstellt, in Abhängigkeit von einer physikalischen Trägheit Jₛₛ des Steuerknüppels (MA) und einem auf den Steuerknüppel (MA) zu übertragenden Trägheitssollwert Ka_{spec}; und
zur Berechnung eines an der Welle des Motors (MO) anzusteuernden Drehmoments durch lineare Kombination einer Winkelposition der Welle relativ zu einem Stator des Motors (MO), einer Drehzahl der Welle relativ zu dem Stator und einer Beschleunigung der Welle relativ zu dem Stator mit jeweils der ersten, zweiten und dritten Stärke Kp, Kv und Ka.

9. Steuerungsvorrichtung nach Anspruch 8, die ferner einen Sensor (CPO) umfasst, der dazu ausgelegt ist, eine Winkelposition der Welle relativ zu dem Stator zu ermitteln.

10. Luftfahrzeug, das die Steuerungsvorrichtung nach Anspruch 8 oder 9 umfasst.

## Claims

1. A method of controlling a motor (MO) of an aircraft control device, the device including an aircraft control stick (MA), the stick (MA) being connected by a mechanical connection (LI) to a shaft of the motor (MO), the method comprising the steps of:
- determining (202):
- a first intensity Kp, representing a stiffness depending of a physical stiffness Kₛₛ of the mechanical connection (LI) and of a stiffness setpoint Kp_{spec} to be restored on the stick (MA),
- a second intensity Kv, representing a damping depending of a physical damping fₛₛ between the stick (MA) and the motor (MO) and of a damping setpoint Kv_{spec} to be restored on the stick (MA), and
- a third intensity Ka, representing an inertia depending of a physical inertia Jₛₛ of the stick (MA) and of an inertia setpoint Ka_{spec} to be restored on the stick (MA); and
- calculating (203) a torque to be controlled on the shaft of the motor (MO) by linear combination of an angular position of the shaft relative to a stator of the motor (MO), of a speed of rotation of the shaft relative to the stator and of an acceleration of the shaft relative to the stator with respectively the first, second and third intensities Kp, Kv and Ka.

2. The control method according to claim 1, wherein:
the determination step (202) uses the formula: $Kp = {R}^{2} \frac{{K}_{ss} {Kp}_{spec}}{\left(\frac{1}{{r}_{p}}{K}_{ss}-{Kp}_{spec}\right)}$ where:
R is a mechanical connection reduction ratio (LI),
Kₛₛ is the physical stiffness of the mechanical connection (LI),
rₚ is a radius of the stick (MA) and
Kp_{spec} is the stiffness setpoint to be restored on the stick (MA).

3. The control method according to claim 1 or 2, wherein:
the determination step (202) uses the formula: $Kv = {R}^{2} \left({r}_{p}{Kv}_{spec}{\left(\frac{{K}_{ss} + \overline{K} p}{{K}_{ss}}\right)}^{2}-{\left(\frac{\overline{K} p}{{K}_{ss}}\right)}^{2}{f}_{ss}\right)$ where:
R is a mechanical connection reduction ratio (LI),
rₚ is a radius of the stick (MA),
fₛₛ represents the physical damping between the stick (MA) and the motor (MO), and
Kv_{spec} is the damping setpoint to be restored on the stick (MA).

4. The control method according to any of claims 1 to 3 wherein:
the determination step (202) uses the formula: $Ka = \left({r}_{p}{. Ka}_{spec}-{J}_{ss}\right) {\left(R\frac{{K}_{ss} + \overline{K} p}{{K}_{ss}}\right)}^{2} + \frac{{R}^{2} {\left({f}_{ss}\overline{K}p-\overline{K}{vK}_{ss}\right)}^{2}}{{K}_{ss}^{2} \left({K}_{ss}+\overline{K}p\right)} - {J}_{mot}$ where:
R is a mechanical connection reduction ratio (LI),
rₚ is a radius of the stick (MA),
Jₛₛ represents the physical inertia of the stick (MA),
Jₘₒₜ represents the physical inertia of the shaft of the motor (MO) and
Ka_{spec} is the inertia setpoint to be restored on the stick (MA).

5. The control method according to any of claims 1 to 4, comprising a step of receiving (202) the angular position of the shaft of the motor (MO), the angular position being received from a position sensor (CPO), wherein the speed is determined by derivation of the angular position and the acceleration is determined by second derivation of the angular position.

6. The control method according to any of claims 1 to 5, wherein the stiffness setpoint, the damping setpoint and the inertia setpoint are determined from respectively the angular position, the speed and the acceleration.

7. The control method according to any of claims 1 to 6 further comprising a step of controlling (204) the motor (MO), the step (204) of controlling comprising:
- determining an electric current setpoint from the torque, and
- regulating the electric current setpoint using a current corrector and a measurement of an electric current at the terminals of the motor (MO).

8. An aircraft control device, the device comprising:
- a stick (MA),
- a motor (MO) comprising a shaft and a stator, the shaft being rotatably mounted in the stator, and
- a processing unit (UNIT),
the shaft being connected to the stick (MA) by a mechanical connection (LI),
the stick (MA) being configured to control the aircraft,
the processing unit (UNIT) being configured to determine:
- a first intensity Kp representing a stiffness depending of a physical stiffness Kₛₛ of the mechanical connection (LI) and of a stiffness setpoint Kp_{spec} to be restored on the stick (MA),
- a second intensity Kv representing a damping depending of a physical damping fₛₛ between the stick (MA) and the motor (MO) and of a damping setpoint Kv_{spec} to be restored on the stick (MA), and
- a third intensity Ka representing an inertia depending of a physical inertia Jₛₛ of the stick (MA) and of an inertia setpoint Ka_{spec} to be restored on the stick (MA); and
and to calculate a torque to be controlled on the shaft of the motor (MO) by linear combination of an angular position of the shaft relative to the stator of the motor (MO), of a speed of rotation of the shaft relative to the stator and of an acceleration of the shaft relative to the stator with respectively the first, second and third intensities Kp, Kv and Ka.

9. The control device according to claim 8 further comprising a sensor (CPO) configured to determine an angular position of the shaft relative to the stator.

10. An aircraft comprising the control device of claim 8 or 9.
